# EUROPEAN PATENT APPLICATION

(11) **EP 4 806 312 A1**
(43) Date of publication of application: **16.09.2026**
(21) Application number: 26164651.7
(22) Date of filing: 13.03.2026
(51) Int. Cl.: A47J 37/06

(54) **AIR FRYER**

(30) Priority: 15.03.2025 CN 202510306918
(71) Applicant: Ningbo Careline Electric Appliance Co., Ltd., Ningbo, Zhejiang 315000 (CN)
(72) Inventor: Yichi, ZHANG, Ningbo City Zhejiang Province, 315000 (CN); Rongjie, BAI, Ningbo City Zhejiang Province, 315000 (CN); Zhixiang, XIANG, Ningbo City Zhejiang Province, 315000 (CN)
(74) Representative: Meyer-Dulheuer MD Legal Patentanwälte PartG mbB

(57) **Abstract**

The present disclosure relates to an air fryer, comprising a body with a first cooking cavity inside, the body is provided with a first hot air circulation system communicated with the first cooking cavity, the front side of the first cooking cavity is provided with a doorway communicated with the outside world, the lower part of the first cooking cavity is detachably provided with a cooking pot with an open top through the doorway, the upper part of the first cooking cavity is detachably provided with a baking tray with through holes through the doorway, the through holes on the baking tray are located directly above the open top of the cooking pot, the lower part of the first cooking cavity is provided with a first heating element, which is used for heating the outer wall of the cooking pot. By arranging the cooking pot and the baking tray in the first cooking cavity, the air fryer can realize air frying, boiling, tender roasting and other functions of the air fryer, which not only can meet users' diversified cooking needs, but also can effectively reduce the user's use cost and improve the user experience.

## Description

### CROSS REFERENCE TO RELATED APPLICATIONS

The present disclosure claims priorities to the Chinese patent application No. 2025103069187 filed to the China Patent Office on March 15, 2025 and entitled "A Composite Multifunctional Air Fryer and Its Control Method", the entire contents of which are incorporated herein by reference.

### TECHNICAL FIELD

The present disclosure relates to the technical field of kitchen household appliances and cooking appliances, in particular to an air fryer.

### BACKGROUND

With the improvement of people's living standards, the functional requirements for kitchen cooking equipment are becoming increasingly diversified. However, traditional air fryers have relatively single functions, usually only capable of realizing the air frying and roasting function, and cannot meet users' diversified cooking needs. If users need to perform different cooking methods, they need to purchase a variety of different cooking equipment, which not only occupies a lot of kitchen space but also increases the user's use cost. Moreover, most of the existing cooking equipment has unreasonable structural designs, which easily leads to uneven heating of food during the cooking process, resulting in poor cooking effects and poor user experience.

### SUMMARY

The present invention provides an air fryer, comprising a body with a first cooking cavity inside, wherein the body is provided with a first hot air circulation system communicated with the first cooking cavity, and the front side of the first cooking cavity is provided with a doorway communicated with the outside world, characterized in that the lower part of the first cooking cavity is detachably provided with a cooking pot with an open top through the doorway, the upper part of the first cooking cavity is detachably provided with a baking tray with through holes through the doorway, there is a gap between the projections of the cooking pot on the plane where the doorway is located and the projections of the baking tray on the plane where the doorway is located, the through holes on the baking tray are located directly above the open top of the cooking pot, the lower part of the first cooking cavity is provided with a first heating element, the first heating element is used for heating the outer wall of the cooking pot.

In one or more embodiments, the left and right side walls of the upper part of the first cooking cavity are provided with guide rails extending towards the doorway, the left and right sides of the baking tray are slidably arranged on the guide rails.

In one or more embodiments, the baking tray is a concave structure with an open top, the bottom wall of the baking tray is provided with the through holes, the included angle between the side wall and the bottom wall of the baking tray is an obtuse angle.

In one or more embodiments, the tops of the left and right side walls of the baking tray are suitable for being folded outward to form flanges, the flanges are slidably arranged on the guide rails.

In one or more embodiments, the first heating element is protrudingly arranged on the bottom wall of the first cooking cavity, the cooking pot is placed on the first heating element, the shape of the bottom surface of the cooking pot matches the shape of the upper surface of the first heating element.

In one or more embodiments, a detachable handle is provided on the side of the cooking pot opposite to the doorway.

In one or more embodiments, the doorway is provided with a matching door cover plate, the door cover plate is used for closing or opening the doorway.

In one or more embodiments, the first hot air circulation system includes a first hot air cavity located at the rear side of the first cooking cavity and communicated with it, a first hot circulation fan arranged in the first hot air cavity, the rear side wall of the first cooking cavity below the baking tray is provided with a first air return port communicating the first cooking cavity and the first hot air cavity, the rear side wall of the first cooking cavity above the baking tray is provided with a first air outlet communicating the first cooking cavity and the first hot air cavity.

In one or more embodiments, a second heating element is arranged inside the first cooking cavity, the second heating element is located directly above the baking tray.

In one or more embodiments, a second cooking cavity is arranged inside the body, the second cooking cavity is located above, below, left or right of the first cooking cavity, the body is provided with a second hot air circulation system communicated with the second cooking cavity, the front side of the second cooking cavity is provided with an opening communicated with the outside world, the second cooking cavity is detachably provided with a frying basket with an open top through the opening.

In one or more embodiments, the second hot air circulation system includes a second hot air cavity located at the rear side of the second cooking cavity and communicated with it, a second hot circulation fan arranged in the second hot air cavity, the rear side wall of the frying basket is provided with an air exhaust port, the rear side wall of the second cooking cavity is provided with a second air return port opposite to the air exhaust port and communicating the second cooking cavity and the second hot air cavity, the rear side wall of the second cooking cavity above the frying basket is provided with a second air outlet communicating the second cooking cavity and the second hot air cavity.

In one or more embodiments, a third heating element is arranged inside the second cooking cavity, the third heating element is located directly above the frying basket.

In one or more embodiments, a second heating element is arranged inside the first cooking cavity, the second heating element is located directly above the baking tray, the air fryer comprises:
Air frying mode: the food is placed in the baking tray, the first heating element is controlled not to operate, the second heating element and the first hot air circulation system are controlled to operate to generate circulating hot air, the circulating hot air passes through the baking tray and air-fries the food in the baking tray;
Tender roasting mode: the food is placed in the baking tray, an appropriate amount of water is added into the cooking pot, the second heating element and the first hot air circulation system are controlled to operate to generate circulating hot air, the first heating element is controlled to operate to generate water vapor, the water vapor merges into the circulating hot air to hydrate and tender roast the food in the baking tray;
Boiling mode: an appropriate amount of water is added into the cooking pot, the food is placed in the cooking pot, the second heating element and the first hot air circulation system are controlled not to operate, the first heating element is controlled to operate to heat the water in the cooking pot, the water heats the food in the cooking pot.

In one or more embodiments, in the tender roasting mode, the first heating element is controlled to operate at a first power, and in the boiling mode, the first heating element is controlled to operate at a second power, the first power is less than the second power.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
FIG. 1 is an overall schematic diagram of the first embodiment of the present application.
FIG. 2 is an overall cross-sectional view of the first state of the first embodiment of the present application.
FIG. 3 is an overall cross-sectional view of the second state of the first embodiment of the present application.
FIG. 4 is an exploded structural schematic diagram of the first embodiment of the present application.
FIG. 5 is a logic control schematic diagram of the air frying mode of the first embodiment of the present application.
FIG. 6 is a logic control schematic diagram of the boiling mode of the first embodiment of the present application.
FIG. 7 is a logic control schematic diagram of the tender roasting mode of the first embodiment of the present application.
FIG. 8 is an overall schematic diagram of the second embodiment of the present application.
FIG. 9 is an overall cross-sectional view of the first state of the second embodiment of the present application.
FIG. 10 is an overall cross-sectional view of the second state of the second embodiment of the present application.
FIG. 11 is an exploded structural schematic diagram of the second embodiment of the present application.

### DETAILED DESCRIPTION

To make the objectives, technical solutions, and advantages of the embodiments of the present disclosure clearer, the technical solutions in the embodiments of the present disclosure will be clearly and completely described below with reference to the accompanying drawings in the embodiments of the present disclosure. Obviously, the described embodiments are some embodiments of the present disclosure, but not all embodiments. The components of the embodiments of the present disclosure generally described and illustrated in the accompanying drawings herein can be arranged and designed in various different configurations.

Therefore, the following detailed description of the embodiments of the present disclosure provided in the accompanying drawings is not intended to limit the scope of the claimed present disclosure, but merely represents selected embodiments of the present disclosure. Based on the embodiments in the present disclosure, all other embodiments obtained by those of ordinary skill in the art without creative work shall fall within the protection scope of the present disclosure.

### Embodiment 1:

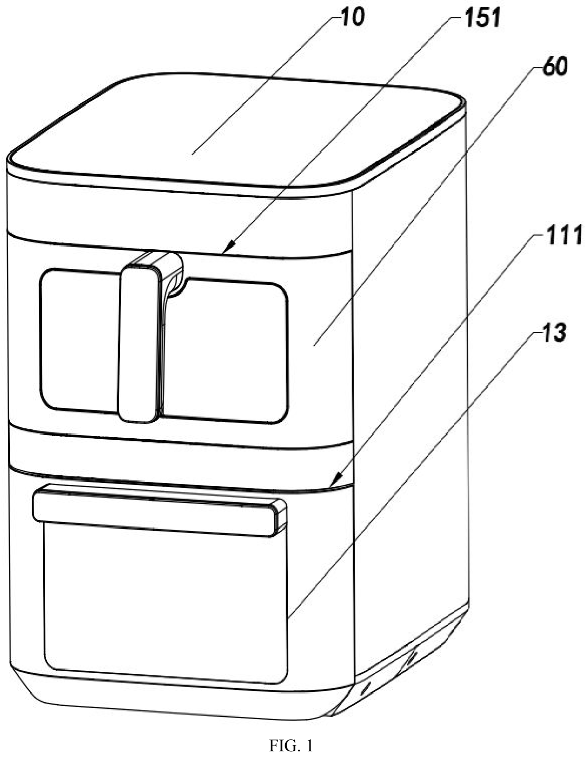

As shown in FIG. 1 to 4, they are schematic diagrams of a first embodiment of an air fryer provided by the present invention, the air fryer includes a body 10, a first cooking cavity 11 arranged in the body 10, and a first hot air circulation system 20 communicated with the first cooking cavity 11, the front side of the first cooking cavity 11 is provided with a doorway 111 communicated with the outside world, the lower part of the first cooking cavity 11 is detachably provided with a cooking pot 30 with an open top through the doorway 111, the upper part of the first cooking cavity 11 is detachably provided with a baking tray 40 with through holes through the doorway 111, there is a gap h between the projections of the cooking pot 30 and the baking tray 40 on the plane where the doorway 111 is located, the through holes on the baking tray 40 are suitable for being located directly above the open top of the cooking pot 30, the lower part of the first cooking cavity 11 is provided with a first heating element 12, the first heating element 12 is suitable for heating the outer wall of the cooking pot 30. By arranging the cooking pot 30 and the baking tray 40 in the first cooking cavity 11, the air fryer can not only realize air frying and boiling of food, but also realize tender roasting of food.

Specifically, when the user places food on the baking tray 40, the circulating hot air generated by the first hot air circulation system 20 can be used to heat the food on the baking tray 40, thereby realizing the air frying function of the air fryer; when the user puts water and food into the cooking pot 30, the first heating element 12 can be used to heat the water in the cooking pot 30, so as to cook the food with water, thereby realizing the boiling function of the air fryer; when the user places food on the baking tray 40 and places a small amount of water in the cooking pot 30, the first heating element 50 can be used to heat the water in the cooking pot 30 into water vapor, the water vapor is mixed with the circulating hot air generated by the hot air circulation system 20, thereby tender roasting the food on the baking tray 40, and further realizing the tender roasting function of the air fryer. Therefore, by arranging the baking tray 40 and the cooking pot 30 in the air fryer, the air fryer can realize air frying, boiling, tender roasting and other functions, thereby meeting users' diversified cooking needs, effectively improving the convenience of use for users, and enabling users to avoid purchasing a variety of cooking equipment, thereby reducing the user's use cost and kitchen space occupation, and effectively improving the user experience. Meanwhile, by arranging the baking tray 40 above the cooking pot 30 at intervals, the cooking pot 30 and the baking tray 40 will not affect each other during separate installation and disassembly, which effectively improves the convenience of use for users. In addition, by arranging the through holes of the baking tray 40 directly above the open top of the cooking pot 30, the cooking pot 30 can be used to collect oil, food residues and the like generated when the baking tray 40 fries and roasts food, so as to prevent the oil, food residues and the like from flowing into the first cooking cavity 11 and/or outside the body 10, thereby polluting the environment inside the first cooking cavity 11 and/or outside the body 10, and effectively improving the user experience.

In an optional embodiment, the first heating element 12 is preferably an electromagnetic coil, an electric heating plate, etc. When the first heating element 12 is an electromagnetic coil, the first heating element 12 is suitable for being arranged around the outside of the cooking pot 30. Such arrangement can make the magnetic field generated by the first heating element 12 act on the entire outer wall of the cooking pot 30, so that the entire outer wall of the cooking pot 30 can self-heat, and then heat the food in the cooking pot 30 better and more uniformly, effectively improving the cooking efficiency and cooking effect of the food in the cooking pot 30. Meanwhile, when the first heating element 12 is an electric heating plate, the first heating element 12 is suitable for being arranged at the bottom of the cooking pot 30 and thermally coupled with the bottom wall of the cooking pot 30, this can simplify the overall structure of the air fryer while ensuring the cooking efficiency, thereby reducing the production cost and the user's use cost and improving the user experience.

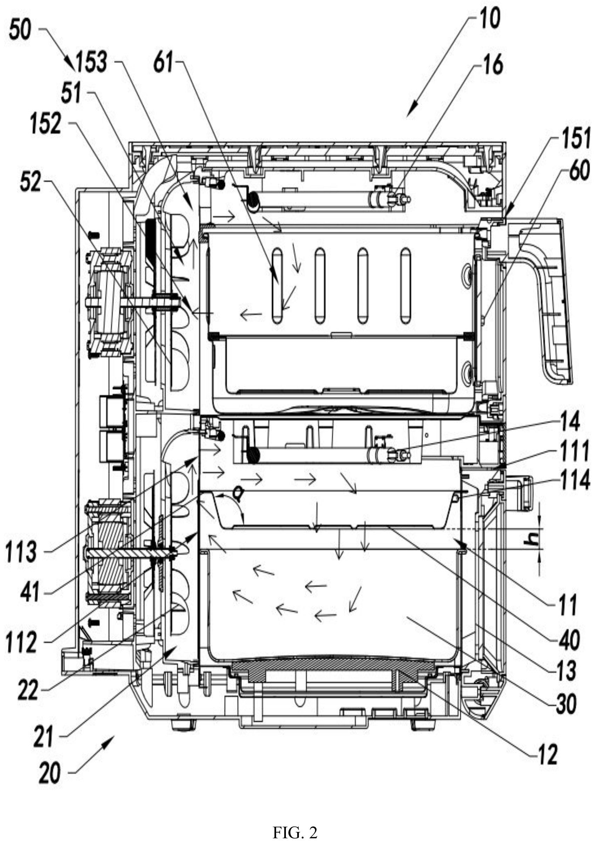

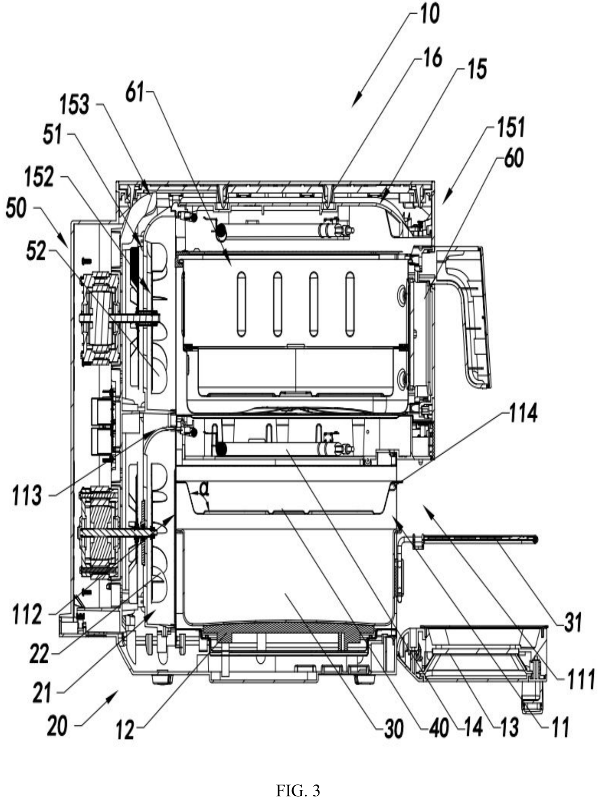

As shown in FIG. 2 and 3, in an optional embodiment, the first hot air circulation system 20 includes a first hot air cavity 21 located at the rear side of the first cooking cavity 11 and communicated with it, and a first hot circulation fan 22 arranged in the first hot air cavity 21, the rear side wall of the first cooking cavity 11 below the baking tray 40 is provided with a first air return port 112 communicating the first cooking cavity 11 and the first hot air cavity 21, the rear side wall of the first cooking cavity 11 above the baking tray 40 is provided with a first air outlet 113 communicating the first cooking cavity 11 and the first hot air cavity 21. When the air fryer is in use, the circulating hot air generated by the first hot air circulation system 20 is suitable for flowing out from the first air outlet 113, passing through the through holes, and then returning to the first hot air circulation system 20 via the gap between the baking tray 40 and the cooking pot 30 and the first air return port 112. By arranging the first air outlet 113 above the baking tray 40, the air fryer can make the circulating hot air generated by the first hot air circulation system 20 contact the food in the baking tray 40 faster and better after flowing out from the first air outlet 113, thereby heating the food in the baking tray 40 and effectively improving the cooking efficiency of the air fryer.

As shown in FIG. 2 to 4, in an optional embodiment, the left and right side walls of the upper part of the first cooking cavity 11 are provided with guide rails 114 extending towards the doorway 111, and the left and right sides of the baking tray 40 are suitable for being slidably arranged on the guide rails 114, the guide rails 114 are suitable for supporting the installation of the baking tray 40. By supporting the installation of the baking tray 40 through the guide rails 114, the baking tray 40 can be stably suspended in the first cooking cavity 11, so that the circulating hot air generated by the first hot air circulation system 20 can better heat the upper and lower surfaces of the food in the baking tray 40, effectively improving the cooking efficiency. Meanwhile, the guide rails 114 are also suitable for guiding the installation of the baking tray 40. By guiding the installation of the baking tray 40 through the guide rails 114, the difficulty of disassembly and installation of the baking tray 40 can be effectively reduced, and the convenience of use for users can be improved.

As shown in FIG. 2 to 4, in an optional embodiment, the baking tray 40 is a concave structure with an open top, and the bottom wall of the baking tray 40 is provided with the through holes. By arranging the baking tray 40 as a concave structure with an open top, it can not only limit the food on the baking tray 40 to reduce the situation that the food on the baking tray 40 falls due to the shaking of the baking tray 40, but also collect the oil, soup and the like generated during the cooking of the food in the baking tray 40 and introduce them into the cooking pot 30 through the through holes, so as to prevent the oil, soup and the like from flowing out into the first cooking cavity 11 and polluting the environment inside the first cooking cavity 11. Meanwhile, by arranging the baking tray 40 as a concave structure with an open top, the amount of food that can be cooked by the baking tray 40 can also be increased, thereby improving the cooking efficiency of the air fryer.

As shown in FIG. 2 to 4, in an optional embodiment, the included angle α between the side wall and the bottom wall of the baking tray 40 is preferably an obtuse angle such as 110°, 120°, 130°, etc. By setting the included angle α between the side wall and the bottom wall of the baking tray 40 to an obtuse angle such as 110°, 120°, 130°, etc., it can not only further increase the amount of food that can be cooked by the baking tray 40, thereby improving the cooking efficiency of the air fryer, but also use the outer wall of the baking tray 40 to guide the circulating hot air flowing out of the cooking pot 30, thereby improving the hot air circulation efficiency and cooking efficiency in the first cooking cavity 11.

As shown in FIG. 2 to 4, in an optional embodiment, the tops of the left and right side walls of the baking tray 40 are suitable for being folded outward to form flanges 41, and the flanges 41 are slidably arranged on the guide rails 114. By arranging the flanges 41 on the left and right sides of the baking tray 40, the contact area between the baking tray 41 and the guide rails 114 can be increased, so that the baking tray 40 can be better and more stably suspended on the guide rails 114, effectively improving the structural stability and performance stability of the air fryer. Meanwhile, the flanges 41 are also suitable for providing a point of application for users. Users can better disassemble and install the baking tray 40 by holding the flanges 41, effectively improving the convenience of use and user experience of the baking tray 40.

As shown in FIG. 2 to 4, in an optional embodiment, the first heating element 12 is suitable for being protrudingly arranged on the bottom wall of the first cooking cavity 11, the cooking pot 30 is suitable for being placed on the first heating element 12, and the shape of the bottom surface of the cooking pot 30 matches the shape of the upper surface of the first heating element 12. By arranging the first heating element 12 at the bottom of the first cooking cavity 11 and placing the cooking pot 30 on the first heating element 12, the first heating element 12 can be used to better heat the cooking pot 30, effectively improving the heating efficiency of the air fryer. Meanwhile, by setting the shape of the bottom surface of the cooking pot 30 to match the shape of the upper surface of the first heating element 12, it can not only increase the contact area between the cooking pot 30 and the first heating element 12, thereby further improving the cooking efficiency of the air fryer, but also enable the first heating element 12 to heat the food in the cooking pot 30 better and more uniformly, effectively improving the cooking effect of the air fryer.

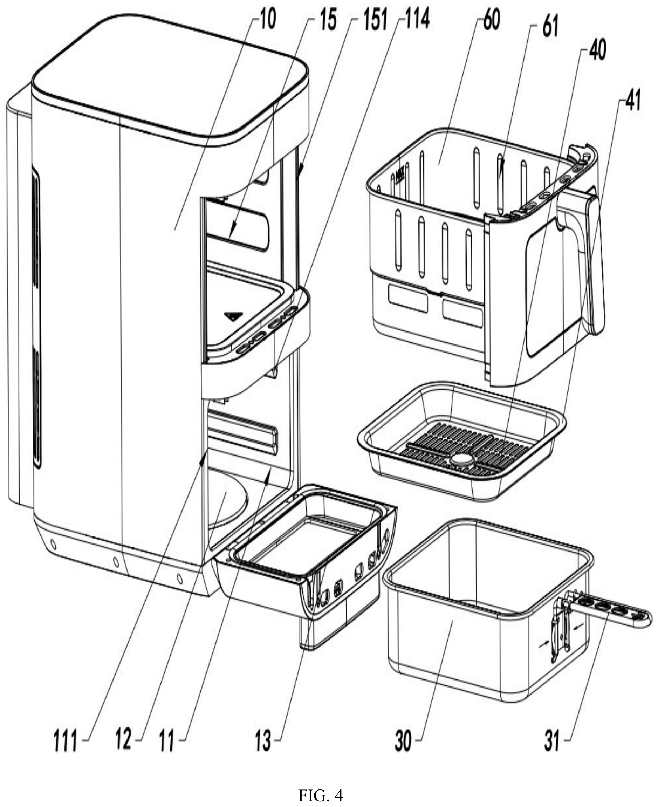

As shown in FIG. 3 and 4, in an optional embodiment, a detachable handle 31 is provided on the side of the cooking pot 30 opposite to the doorway 111. By arranging a detachable handle 31 on the cooking pot 30, it is not only convenient for users to hold the handle 31 to disassemble and install the cooking pot 30, effectively improving the convenience of use of the cooking pot 30 for users, but also can realize the storage and transportation of the cooking pot 30 by disassembling the handle 31.

As shown in FIG. 1 to 4, in an optional embodiment, the doorway 111 is provided with a matching door cover plate 13, the door cover plate 13 is used for closing or opening the doorway 111. By arranging the door cover plate 13 at the doorway 111, it can not only close the doorway 111 when the air fryer is not in use to reduce the pollution of the first cooking cavity 11 by external dust, impurities and the like, thereby affecting the hygiene and use safety of the cooked food, but also close the doorway 111 when the air fryer is in working state to reduce the outflow of circulating hot air in the first cooking cavity 11, thereby ensuring the cooking efficiency and cooking effect of the air fryer. Meanwhile, by arranging the door cover plate 13 at the doorway 111, the first cooking cavity 11 can also be covered, thereby improving the overall appearance of the air fryer.

As shown in FIG. 2 and 3, in an optional embodiment, a second heating element 14 is arranged inside the first cooking cavity 11, and the second heating element 14 is located directly above the baking tray 40. By arranging the second heating element 14 directly above the baking tray 40, the second heating element 14 can be used to better heat the food in the baking tray 40, effectively improving the cooking efficiency of the air fryer.

As shown in FIG. 1 to 4, in an optional embodiment, a second cooking cavity 15 is further arranged inside the body 10, the second cooking cavity 15 is preferably located above or below the first cooking cavity 11, the body 10 is provided with a second hot air circulation system 50 communicated with the second cooking cavity 15, the front side of the second cooking cavity 15 is provided with an opening 151 communicated with the outside world, the second cooking cavity 15 is detachably provided with a frying basket 60 with an open top through the opening 151. By arranging the second cooking cavity 15 in the body and arranging the second cooking cavity 15 above the first cooking cavity 11, it can not only cooperate with the first cooking cavity 11, so that the air fryer can cook a variety of foods at the same time, effectively improving the cooking efficiency of the air fryer, but also reduce the space occupation of the air fryer, so as to facilitate storage and transportation. In addition, in another optional embodiment, the second cooking cavity 15 can also be arranged on the left or right side of the first cooking cavity 11. By arranging the second cooking cavity 15 on the left or right side of the first cooking cavity 11, it can also cooperate with the first cooking cavity 11, so that the air fryer can cook a variety of foods at the same time, effectively improving the cooking efficiency of the air fryer.

As shown in FIG. 2 and 3, in an optional embodiment, the second hot air circulation system 50 includes a second hot air cavity 51 located at the rear side of the second cooking cavity 15 and communicated with it, and a second hot circulation fan 52 arranged in the second hot air cavity 51, the rear side wall of the frying basket 60 is provided with an air exhaust port 61, the rear side wall of the second cooking cavity 15 is provided with a second air return port 152 opposite to the air exhaust port 61 and communicating the second cooking cavity 15 and the second hot air cavity 51, the rear side wall of the second cooking cavity 15 above the frying basket 60 is provided with a second air outlet 153 communicating the second cooking cavity 15 and the second hot air cavity 51, the circulating air flow generated by the second hot air circulation system 50 is suitable for flowing out through the second air outlet 153, entering the frying basket 60 from the open top of the frying basket 60, and returning to the second hot air circulation system 50 via the air exhaust port 61 and the second air return port 152. By arranging the second air outlet 153 above the frying basket 60, the circulating hot air generated by the second hot air circulation system 50 can contact the food in the frying basket 60 faster and better after flowing out from the second air outlet 153, thereby heating the food in the frying basket 60 and effectively improving the cooking efficiency of the air fryer. Meanwhile, by arranging an independent hot air circulation path in the second cooking cavity 15, mutual influence with the first cooking cavity 11 can be avoided, and the hot air circulation efficiency and cooking efficiency in the first cooking cavity 11 and the second cooking cavity 15 can be effectively guaranteed.

As shown in FIG. 2 and 3, in an optional embodiment, a third heating element 16 is arranged inside the second cooking cavity 15, the third heating element 16 is suitable for being located directly above the frying basket 60, and the third heating element 16 is suitable for heating the circulating air flow generated by the second hot air circulation system 50 to form a circulating hot air flow. By arranging the third heating element 16 in the second cooking cavity 15, the air fryer can realize independent heating of the food in the second cooking cavity 15. It not only allows users to selectively use the first cooking cavity 11 and/or the second cooking cavity 15 according to their own needs to cook the food in the first cooking cavity 11 and/or the second cooking cavity 15, effectively improving the convenience of use for users, but also enables the first cooking cavity 11 and the second cooking cavity 15 to not affect each other when cooking food, thereby reducing some unnecessary energy consumption of the air fryer while ensuring the cooking efficiency and cooking effect of the food, and further reducing the user's use cost of the air fryer. Meanwhile, by arranging the third heating element 16 directly above the frying basket 60, the third heating element 16 can be used to better heat the food in the frying basket 60, effectively improving the cooking efficiency.

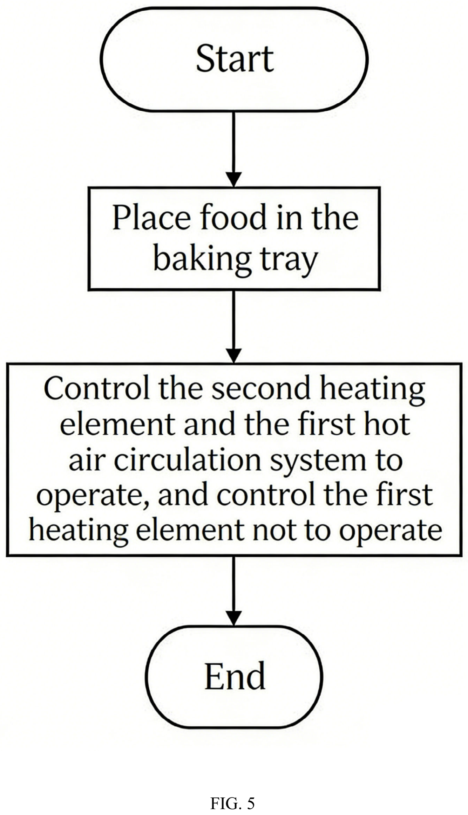

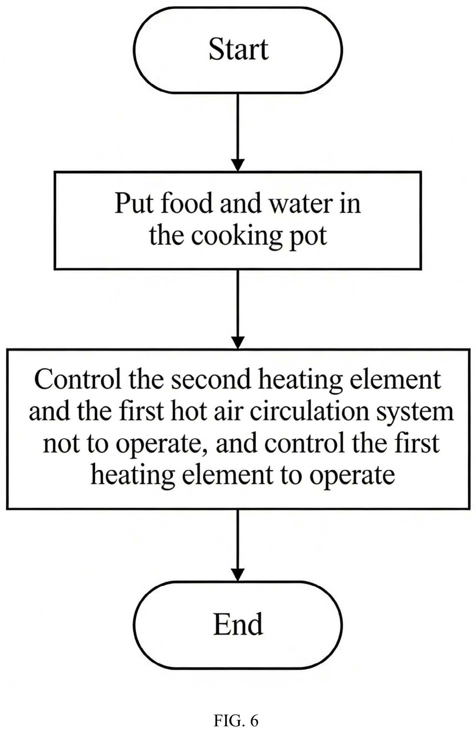

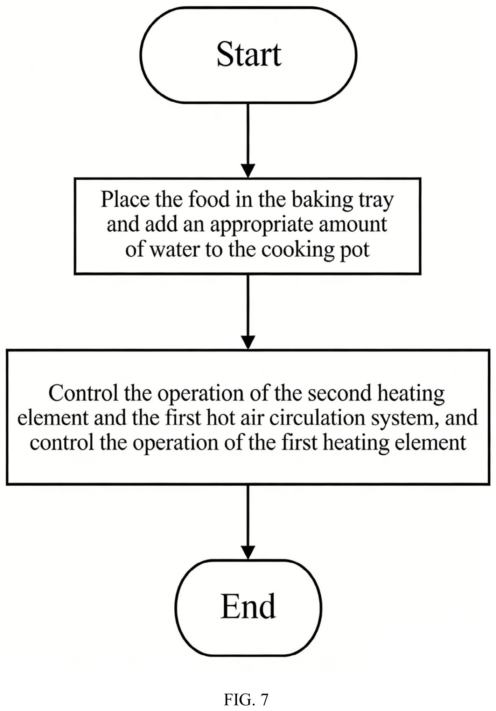

On the other hand, as shown in FIG. 5 to 7, the air fryer includes an air frying mode, a tender roasting mode and a boiling mode. In the air frying mode, by placing food in the baking tray 40, controlling the second heating element 14 and the first hot air circulation system 20 to operate, and controlling the first heating element 12 not to operate, the circulating hot air generated by the first hot air circulation system 20 and the second heating element 14 can be used to heat the food in the baking tray 40, thereby realizing the air frying function of the air fryer. In the tender roasting mode, by placing food in the baking tray 40, adding an appropriate amount of water into the cooking pot 30, controlling the second heating element 14 and the first hot air circulation system 20 to operate, and controlling the first heating element 12 to operate, the water in the cooking pot 30 can be converted into high-temperature water vapor and mixed with the circulating hot air generated by the first hot air circulation system 20 and the second heating element 14, thereby hydrating and tender roasting the food in the baking tray 40, and further realizing the tender roasting function of the air fryer. In the boiling mode, by adding an appropriate amount of water into the cooking pot 30, placing the food in the cooking pot 30 at the same time, controlling the first heating element 12 to operate, and controlling the second heating element 14 and the first hot air circulation system 20 not to operate, the first heating element 12 can be used to heat the cooking pot 30, so that the water in the cooking pot 30 heats the food in the cooking pot 30 after being heated, thereby realizing the boiling function of the air fryer. By setting the air frying mode, the tender roasting mode and the boiling mode in the body 10, the air fryer can respectively realize the air frying function, the tender roasting function and the boiling function of the air fryer, which not only can effectively improve the functional diversity of the air fryer, thereby meeting users' diversified cooking needs and effectively improving the convenience of use for users, but also can reduce the user's use cost caused by purchasing a variety of cooking devices and improve the user experience. Meanwhile, by setting the air frying mode, the tender roasting mode and the boiling mode in the body 10, the air fryer can switch between different modes at will according to the user's needs, thereby realizing automatic cooking of different foods, effectively improving the cooking efficiency and cooking effect, and simplifying the cooking steps of the air fryer, effectively improving the convenience of use for users.

In an optional embodiment, the tender roasting mode of the air fryer is suitable for controlling the first heating element 12 to operate at a first power, and the boiling mode is suitable for controlling the first heating element 12 to operate at a second power, and the first power is less than the second power. In the tender roasting mode, the air fryer only needs to heat a small amount of water into high-temperature water vapor to mix with the circulating hot air generated by the first hot air circulation system 20 and the second heating element 14, thereby hydrating and tender roasting the food in the baking tray 40, therefore, by setting the first heating element 12 to operate at a smaller power, it can not only avoid the rapid evaporation of water in the cooking pot 30, thereby causing dry burning of the cooking pot 30, but also reduce the energy consumption of the air fryer while ensuring the hydration effect, thereby reducing the user's use cost. Meanwhile, in the boiling mode, since there is a large amount of water in the cooking pot 30 and the temperature required for boiling is relatively high, by setting the first heating element 12 to operate at a larger power, it can not only effectively ensure the cooking efficiency of the air fryer, but also avoid the problem of poor food taste caused by insufficient boiling temperature and/or too long boiling time, and effectively ensure the cooking effect of the air fryer. In summary, by controlling the first heating element 12 to operate at different powers in different cooking modes, it can not only better cook the food, effectively improve the cooking efficiency and cooking effect of the food, but also reduce the unnecessary energy consumption of the air fryer, thereby reducing the user's use cost of the air fryer and improving the user experience.

In an optional embodiment, the first heating element is suitable for being a heating element with variable heating power, and the first power and the second power are preferably the average power of the first heating element within the same time period. Such arrangement can not only simplify the control logic of the air fryer, but also effectively improve the cooking efficiency of the air fryer. In addition, in another optional embodiment, the first heating element can also be a heating element with fixed heating power, and the first power and the second power are suitable for the first heating element. When the first heating element is a heating element with fixed power, the air fryer can realize different average powers of the first heating element by controlling the different on and off durations of the first heating element within the same period of time, and the first power and the second power are suitable for the average powers of the first heating element with different on and off durations within the same period of time. By setting the first heating element as a heating element with fixed power, the air fryer can not only realize uniform heating of the cooking pot, effectively improving the cooking effect of the air fryer, but also reduce the production cost and the user's use cost of the air fryer.

### Embodiment 2:

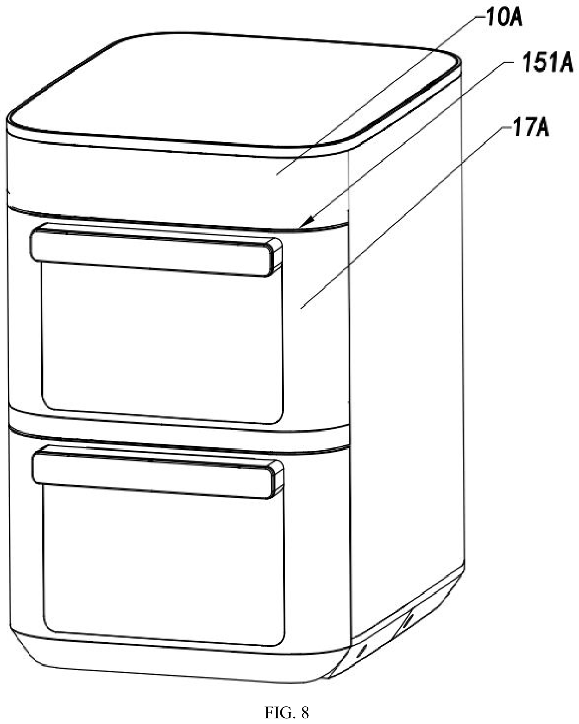

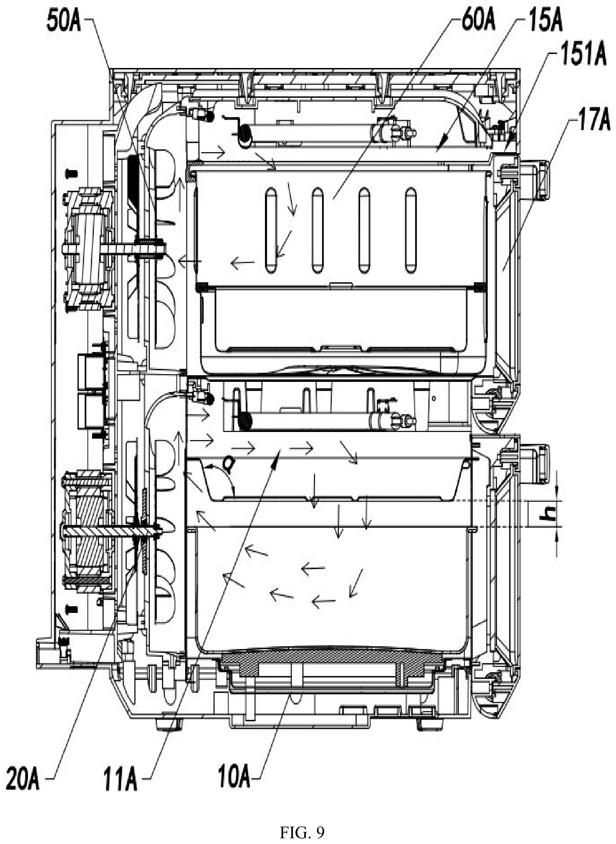

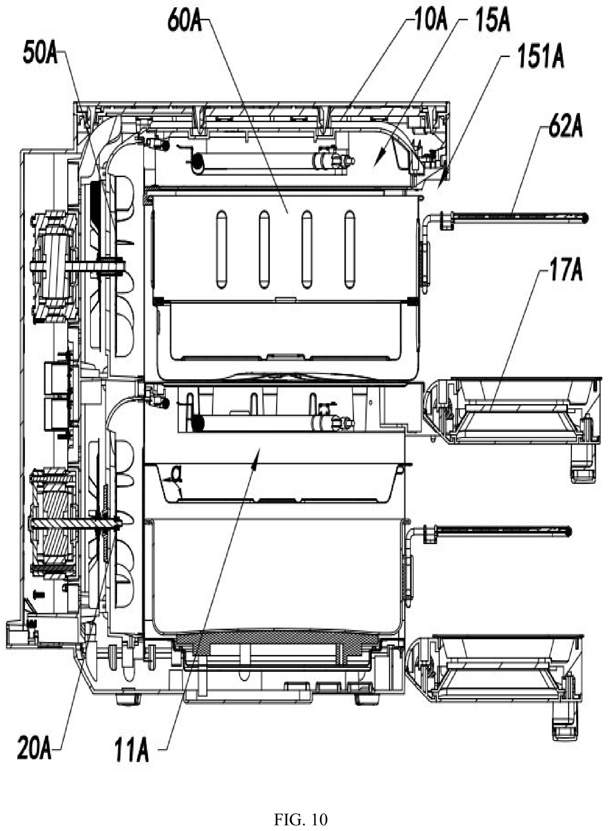

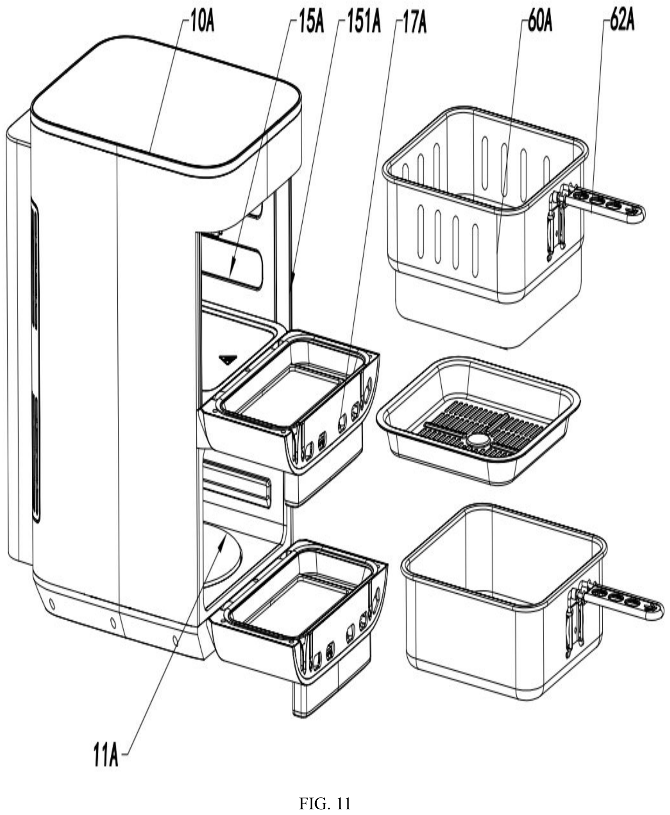

As shown in FIG. 8 to 11, they are schematic diagrams of a second embodiment of an air fryer provided by the present invention. Compared with the air fryer in the first embodiment, the air fryer in the second embodiment has the same partial structure and function, which will not be repeated here, the difference between the air fryer in the second embodiment and the air fryer in the first embodiment lies in the different structures of the frying basket 60 and the second cooking cavity 15.

As shown in FIG. 8 to 11, the air fryer includes a body 10A, the body 10A is provided with a first cooking cavity 11A for placing food and a first hot air circulation system 20A communicated with the first cooking cavity 11A. A second cooking cavity 15A and a second hot air circulation system 50A communicated with the second cooking cavity 15A are arranged above the first cooking cavity 11A, the front side of the second cooking cavity 15A is provided with an opening 151A communicated with the outside world, the second cooking cavity 15A is detachably provided with a frying basket 62A with an open top through the opening 151A. A detachable handle 62A is provided on the side of the frying basket 60A opposite to the opening 151A, the structure of the handle 62A is preferably the same as that of the handle 31 of the air fryer in the first embodiment. By arranging a detachable handle 62A on the frying basket 60A, it is not only convenient for users to hold the handle 62A to disassemble and install the frying basket 60A, effectively improving the convenience of use of the frying basket 60A for users, but also can realize the storage and transportation of the frying basket 60A by disassembling the handle 62A. Meanwhile, by setting the structure of the handle 62A to be the same as that of the handle 31, it can not only effectively improve the applicability of the handle 62A, but also realize that the cooking pot 30 and the frying basket 60A share one handle 62 or the handle 31, thereby effectively reducing the production cost and the user's use cost of the air fryer.

As shown in FIG. 8 to 11, in an optional embodiment, the opening 151A is provided with a matching flip cover 17A, which is used for closing or opening the opening 151A. By arranging the flip cover 17A at the opening 151A, it can not only close the opening 151A when the air fryer is not in use to reduce the pollution of the second cooking cavity 15A by external dust, impurities and the like, thereby affecting the hygiene and use safety of the cooked food, but also close the opening 151A when the air fryer is in working state to reduce the outflow of circulating hot air in the second cooking cavity 15A, thereby ensuring the cooking efficiency and cooking effect of the air fryer. Meanwhile, by arranging the flip cover 17A at the opening 151A, the second cooking cavity 15A can also be covered, thereby improving the overall appearance of the air fryer.

The above content is a further detailed description of the present application in conjunction with specific preferred embodiments, and the purpose of the present application has been fully and effectively achieved. Those skilled in the art should understand that the embodiments of the present application shown in the above description and accompanying drawings are only examples and do not limit the present application. For those of ordinary skill in the art, without departing from the present application, several simple deductions or substitutions can be made, which should all be regarded as falling within the scope of patent protection determined by the claims submitted by the present application.

It should be noted that the terms used here are only intended to describe specific implementations and are not intended to limit exemplary implementations according to the present disclosure. As used herein, unless otherwise explicitly stated in the context, the singular form is also intended to include the plural form. Additionally, it should further be understood that, when the terms "comprising" and/or "including" are used in this specification, they indicate the presence of features, steps, operations, devices, assemblies and/or combinations thereof.

Unless otherwise specified specifically, the relative arrangement, numerical expressions and values of components and steps described in these embodiments do not limit the scope of the present disclosure. At the same time, it should be understood that for ease of description, the dimensions of the various parts shown in the accompanying drawings are not drawn according to an actual proportional relation. For technologies, methods, and equipment known to those of ordinary skill in the related art, detailed discussions may not be made, but in appropriate circumstances, such technologies, methods, and equipment should be considered as part of the granted specification. In all the examples shown and discussed here, any specific value should be interpreted as merely illustrative and not restrictive. Therefore, other examples of exemplary embodiments may have different values. It should be noted that: similar numerals and letters represent similar items in the following accompanying drawings. Therefore, once an item is defined in one accompanying drawing, it does not need to be further discussed in subsequent accompanying drawings.

In the description of the present disclosure, it should be understood that, directional or positional relationships indicated by directional words such as "front, rear, upper, lower, left, right", "transverse, vertical, perpendicular, horizontal", and "top, bottom" are usually based on directional or positional relationships shown in the accompanying drawings, only for the ease of describing the present disclosure and simplifying the description. In the absence of contrary explanation, these directional words do not indicate or imply that devices or elements referred to must have a specific orientation or be constructed and operated in a specific orientation, and therefore cannot be understood as limiting the scope of protection of the present disclosure; and the directional words "inner, outer" refer to the inside and outside relative to own contours of each component.

For ease of description, spatial relative terms such as "above", "over", "on the upper surface of", "on", etc. can be used here to describe the spatial positional relationship between a device or feature shown in the drawing and other devices or features. It should be understood that the spatial relative terms are intended to encompass different orientations in use or operation in addition to the orientation of the devices described in the drawings. For example, if the devices in the accompanying drawings are inverted, the device described as "over other devices or structures" or "above other devices or structures" will be then positioned as "below other devices or structures" or "under other devices or structures". Therefore, the exemplary term "over" may include two orientations: "over" and "below". The device may also be positioned in other different ways (rotated by 90 degrees or in other orientations), and corresponding explanations should be provided for the spatial relative description used here.

In addition, it should be noted that the use of words such as "first" and "second" to define parts is only for the purpose of distinguishing corresponding parts conveniently. If not otherwise stated, the above words do not have a special meaning and therefore cannot be understood as limiting the scope of protection of the present disclosure.

The above provides a detailed introduction to the air fryer provided in the present disclosure. Specific examples are applied herein to explain the principles and implementations of the present disclosure. The illustration of the above embodiments is only used to help understanding a method and its core idea of the present disclosure. Meanwhile, for those of ordinary skill in the art, there may be changes in the specific implementations and application scope based on the ideas of the present disclosure. In summary, the content of this specification should not be understood as limiting the present disclosure.

### Industrial Applicability

In the present application, by arranging the cooking pot and the baking tray in the first cooking cavity, the present application can realize air frying, boiling, tender roasting and other functions of the air fryer, which not only can meet users' diversified cooking needs and effectively improve the convenience of use for users, but also enable users to avoid purchasing a variety of cooking equipment, thereby reducing the user's use cost and kitchen space occupation, and effectively improving the user experience. Meanwhile, by arranging the baking tray above the cooking pot at intervals, the cooking pot and the baking tray will not affect each other during separate installation and disassembly, which effectively improves the convenience of use for users. In addition, by arranging the through holes of the baking tray directly above the open top of the cooking pot, the cooking pot can be used to collect oil, food residues and the like generated when the baking tray fries and roasts food, so as to prevent the oil, food residues and the like from flowing into the first cooking cavity and/or outside the body, thereby polluting the environment inside the first cooking cavity and/or outside the body, and effectively improving the user experience.

## Claims

1. Air fryer, comprising a body with a first cooking cavity inside, wherein the body is provided with a first hot air circulation system communicated with the first cooking cavity, and the front side of the first cooking cavity is provided with a doorway communicated with the outside world, **characterized in that** the lower part of the first cooking cavity is detachably provided with a cooking pot with an open top through the doorway, the upper part of the first cooking cavity is detachably provided with a baking tray with through holes through the doorway, there is a gap between the projections of the cooking pot on the plane where the doorway is located and the projections of the baking tray on the plane where the doorway is located, the through holes on the baking tray are located directly above the open top of the cooking pot, the lower part of the first cooking cavity is provided with a first heating element, the first heating element is used for heating the outer wall of the cooking pot.

2. The air fryer according to claim 1, **characterized in that** the left and right side walls of the upper part of the first cooking cavity are provided with guide rails extending towards the doorway, the left and right sides of the baking tray are slidably arranged on the guide rails.

3. The air fryer according to claim 2, **characterized in that** the baking tray is a concave structure with an open top, the bottom wall of the baking tray is provided with the through holes, the included angle between the side wall and the bottom wall of the baking tray is an obtuse angle.

4. The air fryer according to claim 3, **characterized in that** the tops of the left and right side walls of the baking tray are suitable for being folded outward to form flanges, the flanges are slidably arranged on the guide rails.

5. The air fryer according to claim 1, **characterized in that** the first heating element is protrudingly arranged on the bottom wall of the first cooking cavity, the cooking pot is placed on the first heating element, the shape of the bottom surface of the cooking pot matches the shape of the upper surface of the first heating element.

6. The air fryer according to claim 1, **characterized in that** a detachable handle is provided on the side of the cooking pot opposite to the doorway.

7. The air fryer according to claim 1, **characterized in that** the doorway is provided with a matching door cover plate, the door cover plate is used for closing or opening the doorway.

8. The air fryer according to any one of claims 1-7, **characterized in that** the first hot air circulation system includes a first hot air cavity located at the rear side of the first cooking cavity and communicated with it, a first hot circulation fan arranged in the first hot air cavity, the rear side wall of the first cooking cavity below the baking tray is provided with a first air return port communicating the first cooking cavity and the first hot air cavity, the rear side wall of the first cooking cavity above the baking tray is provided with a first air outlet communicating the first cooking cavity and the first hot air cavity.

9. The air fryer according to claim 8, **characterized in that** a second heating element is arranged inside the first cooking cavity, the second heating element is located directly above the baking tray.

10. The air fryer according to any one of claims 1-9, **characterized in that** a second cooking cavity is arranged inside the body, the second cooking cavity is located above, below, left or right of the first cooking cavity, the body is provided with a second hot air circulation system communicated with the second cooking cavity, the front side of the second cooking cavity is provided with an opening communicated with the outside world, the second cooking cavity is detachably provided with a frying basket with an open top through the opening.

11. The air fryer according to claim 10, **characterized in that** the second hot air circulation system includes a second hot air cavity located at the rear side of the second cooking cavity and communicated with it, a second hot circulation fan arranged in the second hot air cavity, the rear side wall of the frying basket is provided with an air exhaust port, the rear side wall of the second cooking cavity is provided with a second air return port opposite to the air exhaust port and communicating the second cooking cavity and the second hot air cavity, the rear side wall of the second cooking cavity above the frying basket is provided with a second air outlet communicating the second cooking cavity and the second hot air cavity.

12. The air fryer according to claim 11, **characterized in that** a third heating element is arranged inside the second cooking cavity, the third heating element is located directly above the frying basket.

13. The air fryer according to any one of claims 1-12, **characterized in that** a second heating element is arranged inside the first cooking cavity, the second heating element is located directly above the baking tray, the air fryer comprises:
Air frying mode: the food is placed in the baking tray, the first heating element is controlled not to operate, the second heating element and the first hot air circulation system are controlled to operate to generate circulating hot air, the circulating hot air passes through the baking tray and air-fries the food in the baking tray;
Tender roasting mode: the food is placed in the baking tray, an appropriate amount of water is added into the cooking pot, the second heating element and the first hot air circulation system are controlled to operate to generate circulating hot air, the first heating element is controlled to operate to generate water vapor, the water vapor merges into the circulating hot air to hydrate and tender roast the food in the baking tray;
Boiling mode: an appropriate amount of water is added into the cooking pot, the food is placed in the cooking pot, the second heating element and the first hot air circulation system are controlled not to operate, the first heating element is controlled to operate to heat the water in the cooking pot, the water heats the food in the cooking pot.

14. The air fryer according to claim 13, **characterized in that** in the tender roasting mode, the first heating element is controlled to operate at a first power, and in the boiling mode, the first heating element is controlled to operate at a second power, the first power is less than the second power.
